(19) Europäisches Patentamt
European Patent Office
Office européen des brevets

(11) EP 2 040 390 B1

(12) **EUROPEAN PATENT SPECIFICATION**

(45) Date of publication and mention
of the grant of the patent:
**14.04.2010 Bulletin 2010/15**

(51) Int Cl.:
***H04B 7/08*** (2006.01)

(21) Application number: **07115327.4**

(22) Date of filing: **30.08.2007**

(54) **Multiple-antenna interference cancellation**

Störungsunterdrückung mit mehreren Antennen

Annulation d'interférence à antennes multiples

(84) Designated Contracting States:
**AT BE BG CH CY CZ DE DK EE ES FI FR GB GR
HU IE IS IT LI LT LU LV MC MT NL PL PT RO SE
SI SK TR**

(43) Date of publication of application:
**25.03.2009 Bulletin 2009/13**

(73) Proprietor: **LUCENT TECHNOLOGIES INC.
Murray Hill NJ 07974-0636 (US)**

(72) Inventor: **Kuzminskiy, Alexandr
Swindon, Wiltshire SN5 5BG (GB)**

(74) Representative: **Schmidt, Werner Karl et al
Alcatel Lucent
Intellectual Property & Corporate Standards
Lorenzstrasse 10
70435 Stuttgart (DE)**

(56) References cited:
- **QINGLI LIU ET AL: "PERFORMANCE OF
DECISION-FEEDBACK EQUALIZERS WITH
DUAL ANTENNA DIVERSITY" PERSONAL
COMMUNICATION - FREEDOM THROUGH
WIRELESS TECHNOLOGY. SECAUCUS, NJ.,
MAY 18 - 20, 1993, PROCEEDINGS OF THE
VEHICULAR TECHNOLOGY CONFERENCE,
NEW YORK, IEEE, US, vol. CONF. 43, 18 May 1993
(1993-05-18), pages 637-640, XP000393263 ISBN:
0-7803-1267-8**
- **NICOLI M ET AL: "Adaptive Array Processing for
Time-Varying Interference Mitigation in IEEE
802.16 Systems" PERSONAL, INDOOR AND
MOBILE RADIO COMMUNICATIONS, 2006 IEEE
17TH INTERNATIONAL SYMPOSIUM ON, IEEE,
PI, September 2006 (2006-09), pages 1-5,
XP031023592 ISBN: 1-4244-0329-4**
- **KUZMINSKIY ET AL: "Second-order
asynchronous interference cancellation:
Regularized semi-blind technique and non-
asymptotic maximum likelihood benchmark"
SIGNAL PROCESSING, ELSEVIER SCIENCE
PUBLISHERS B.V. AMSTERDAM, NL, vol. 86, no.
12, December 2006 (2006-12), pages 3849-3863,
XP005696117 ISSN: 0165-1684**

EP 2 040 390 B1

**Description**

The present invention relates to multiple-antenna interference cancellation, more particularly to a receiver for wirelessly transmitted digital data bursts and a method for multiple-antenna interference cancellation for wirelessly received digital data bursts. The invention is particular useful for multiple-antenna interference cancellation in unsynchronized backhaul and/or cellular WIMAX-based networks (IEEE 802.16-REVd/D5-2004, "IEEE Standard for Local and Metropolitan Area Networks - Part 16: Air Interface for Fixed Broadband Wireless Access Systems," May 2004).

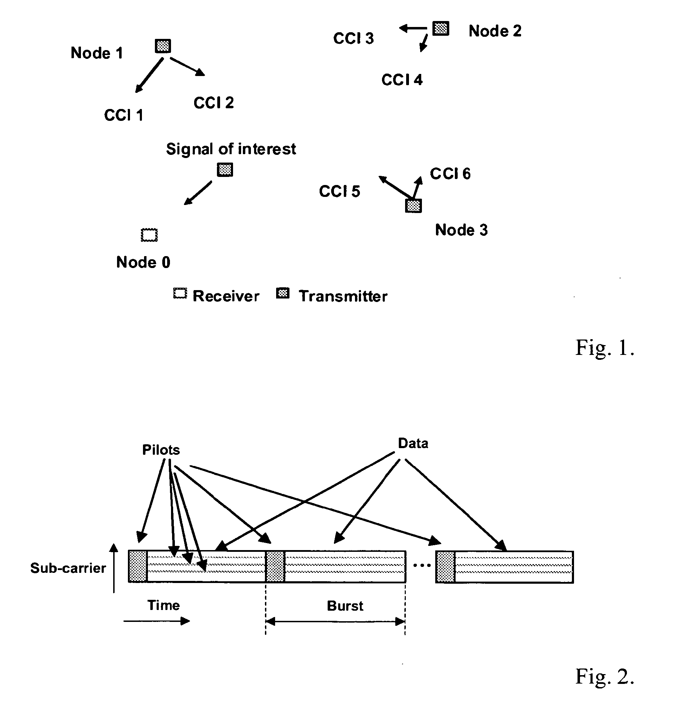

An example of a backhaul fixed wireless network is presented in Fig. 1. The signal of interest is received at node 0. Surrounding nodes 1 - 3 transmit their signals to other destinations (not shown in Fig. 1). This results in co-channel interference (CCI) for reception of the signal of interest.

All nodes transmit similar data frames according to the IEEE 802.16-2004 standard. A data frame structure is illustrated in Fig.2. It consists of L bursts of $N_{symb}$ OFDM symbols including preamble, which contains a training sequence for synchronization and channel estimation, data and pilot sub-carriers.

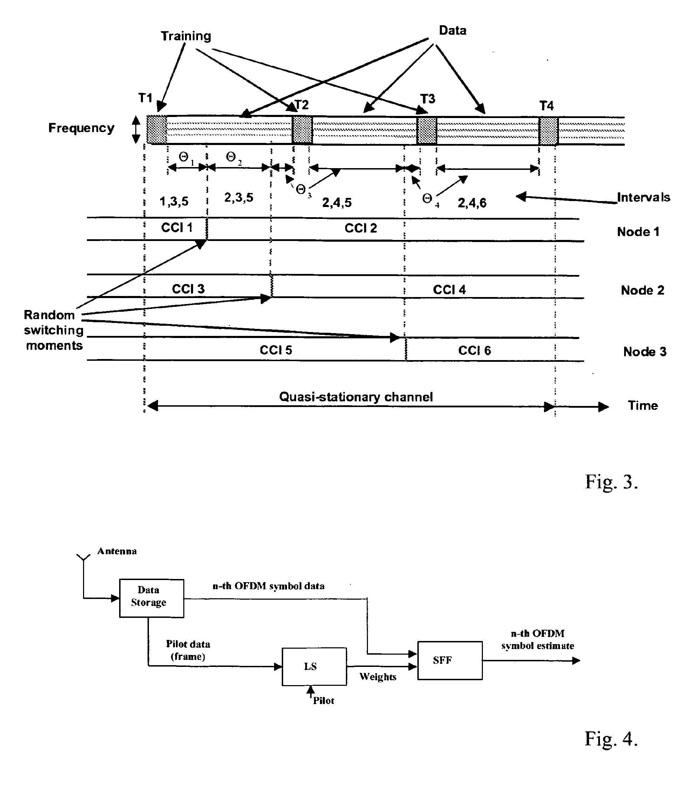

All the signals in Fig. 1 propagate through multipath channels and are received at the receiver of Node 0. A corresponding interference scenario is illustrated in Fig. 3. In a fixed wireless network it is usually assumed that propagation channels are quasi-stationary over the whole data frame. Nevertheless, the interference scenario in Fig. 3 is actually non-stationary because of the random switching moments between different interference components. Random switching moments represent asynchronous transmissions from adjacent nodes to different destinations.

One problem in this scenario is that for some data intervals the sets of CCI components may be different compared to the surrounding training intervals. For example, training interval T1 overlaps with CCI 1, 3 and 5, T2 overlaps with CCI 2, 4, 5, but the data interval $\Theta_2$ contains different a set of CCI 2, 3, 5 that cannot be associated with any of the training intervals shown in Fig. 3. The interference scenario in Fig. 3 actually represents a general class of asynchronous interference scenarios. Particularly, it includes an unsynchronized cellular WIMAX-based network.

One prior art approach for multiple-antenna interference cancellation in asynchronous scenarios such as in Fig. 3 presented in M. Nicoli, M. Sala, O. Simeone, L. Sampietro, C. Santacesaria, "Adaptive array processing for time varying interference mitigation in IEEE 802.16 systems," in Proc. PIMRC, 2006 proposes a stationary training-based processing which is shown in Fig. 4. In this case, one weight vector estimated over all the preambles shown in Fig. 3 is used for data recovery over all OFDM symbols in a frame. A data storage block stores the whole frame received from an antenna of K elements and sends signals from all the pilot intervals to a Least Squares (LS) estimator of the antenna weights and all the data symbols in the frame to a Space-Frequency Filter (SFF). However, this solution cannot be effective in the general case. Indeed, in the example shown in Fig. 3, all 4 preambles contain 6 interference components, but only 3 of them are presented at any time instant during the desired signal data frame. This means that the efficiency of a non-stationary processing that cancels the actual CCI components at the corresponding interval could be much higher compared to the stationary solution of the prior art that is designed to cancel all the CCI presented in the data frame. This is especially the case if the total number of interferers is higher than the number of antenna elements. Although, in some particular cases the prior art solution can be effective, for example, for (almost) synchronous transmissions from the interfering nodes or low power of some CCI components leading to a reduced number of actual interferers presented in the data frame.

Another interference cancellation approach as disclosed in the above publication proposes a non-stationary space-frequency filtering with detection of the CCI changing moments. It is assumed that the interference statistic is not frequency dependent and the CCI covariance matrix is estimated over the tracking sub-carriers. However, this solution is not applicable in many practically important scenarios with similar fading channels for both the desired signal and CCI.

Alternatively, the stationary solution shown in Fig. 4 can be applied on a burst-by-burst basis, where the pilot data from each burst is used for signal estimation of this particular burst. This processing could be effective for some bursts with the same set of CCI for both pilot and data intervals, for example as for burst 3 in Fig. 3. A disadvantage of this solution is that it cannot be effective in situations where new CCI components arrive at the data intervals that are not presented at the corresponding training intervals, for example as for burst 1 in Fig. 3.

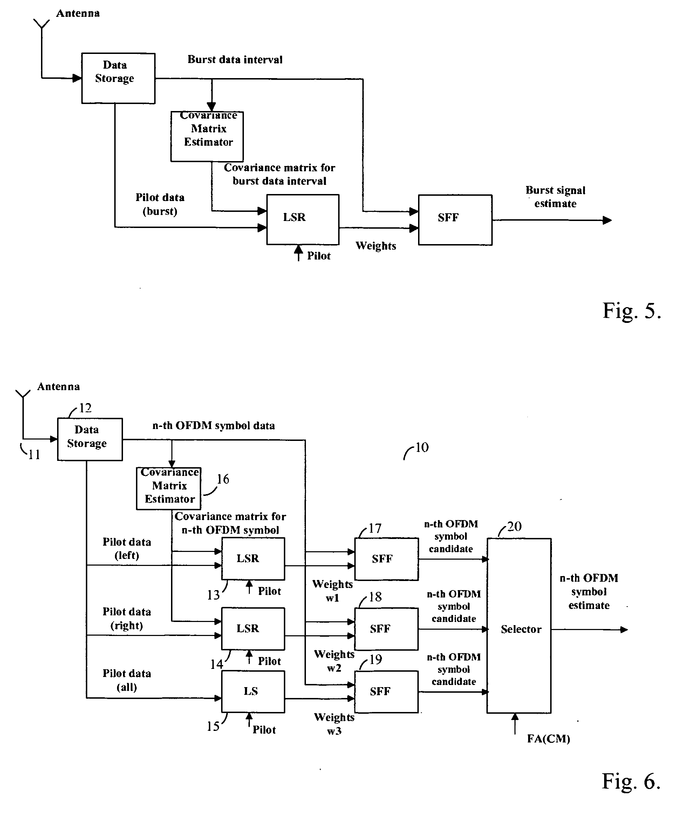

The stationary burst-based processing can be improved in the asynchronous scenario by means of regularization of the LS filtering with the covariance matrix estimated over the data interval of the corresponding burst as disclosed in A. M. Kuzminskiy, Y. I. Abramovich, "Second-order asynchronous interference cancellation: Regularized semi-blind technique and non-asymptotic maximum likelihood benchmark," Signal Processing, vol. 86, no. 12, pp. 3849-3863, 2006, which is incorporated by reference. This solution is illustrated in Fig. 5. The LS with regularization (LSR) block uses the covariance matrix estimated over the whole data interval in the particular burst for calculation of the antenna weights. Again, a disadvantage of this stationary solution is that for some bursts the total number of CCI components may be higher than the number of receiving antennas leading to performance degradation.

Another prior art document is QINGLI LIU ET AL: "PERFORMANCE OF DECISION-FEEDBACK EQUALIZERS WITH DUAL ANTENNA DIVERSITY" PERSONAL COMMUNICATION - FREEDOM THROUGH WIRELESS TECHNOLOGY. SECAUCUS, NJ., MAY 18 - 20,1993, PROCEEDINGS OF THE VEHICULAR TECHNOLOGY CONFERENCE, NEW YORK, IEEE, US, vol. CONF. 43, pages 637-640,

This document disclose a method for channel equalization using decision-feedback equalizers (DFEs) and dual antenna diversity to combat intersymbol interference (ISI). the method disclosed in this document is focused on operation in rapidly changing radio channel conditions

Thus, there remains a need for efficient multiple-antenna interference cancellation, in particular in unsynchronized backhaul and/or cellular WIMAX-based networks (IEEE 802.16-2004).

It is an object of the present invention to overcome the limitations of the prior art and to effectively cancel interference in multiple-antenna receivers in unsynchronized wireless networks.

This object is achieved by the receiver and method according to the independent claims. The dependent claims refer to preferred embodiments of the invention.

A receiver for wirelessly transmitted digital data bursts including training data for wireless channel estimation may comprise a plurality of antenna elements for receiving input data; a first estimator for estimating a first set of antenna weights for the antenna elements from first training data; a second estimator for estimating a second set of antenna weights for the antenna weights from second training data; a first space-frequency filter for providing a first symbol candidate for the input data based on the first set of antenna weights; a second space-frequency filter for providing a second symbol candidate for the input data based on the second set of antenna weights; and a selector for selecting, as data symbol estimate, the first symbol candidate or the second symbol candidate. This allows the calculation of two symbol candidates for the input data based on two sets of antenna weights that are estimated from different training data. The selector selects one of the symbol candidates as estimate for the received data symbol. Preferably, the selection of a symbol candidate is based on a quality measure for the estimate such as a distance to possible signal constellations or any other degree of resemblance with communication signal properties. The invention allows to exploit different training data for the interference cancellation for the given data interval. Thus, it is possible to adapt to changes in the interference situation, e.g. in case of varying CCI components.

According to a preferred embodiment, the selector is configured to select the symbol candidate with the lowest distance from a finite alphabet or constant modulus of the input data. Thus, properties of the communication signals are utilized for the selection which may be performed on a symbol-by-symbol basis.

If the input data correspond to payload data of a first data burst, the first training data correspond to the training data of the first data burst, and the second training data correspond to the training data of a second data burst, it is possible to estimate symbol candidates for the payload data of the first data burst using antenna weights that are derived from the training data of the first data burst and the second data burst, respectively. Whichever symbol candidate is a better estimate can be selected as estimate for the payload data symbol. The second data burst may precede or succeed the first data burst, depending on the position of the training data in the data burst. Preferably, the training data (e.g. a pilot signal) is in the initial section of the data burst and the second data burst follows the first data burst. If the asynchronous event that changes the interference scenario is closer to the end of the data burst, most of the payload data in the leading portion of the data burst has experienced a channel as estimated based upon the training data of the first data burst. On the other hand, the final portion of the payload data is preferably space-frequency filtered using antenna weights estimated from the training data of the second data burst that fits closer to the interference configuration for this portion of the payload data. The selector automatically selects the best estimate for each symbol.

If the first training data correspond to the training data of a first data burst and the second training data correspond to the training data of a plurality of data bursts, more training data for estimating the second antenna weights are available which will result in more stable and reliable estimates. In this case, the selector can choose between a symbol candidate calculated from antenna weights estimated from a current short time window of training data that is in close relation to the payload data and a symbol calculated from long term antenna weights.

The above concepts may be combined by providing a third estimator for estimating a third set of antenna weights from third training data and a third space-frequency filter for providing a third symbol candidate for the input data based on the third set of antenna weights. In this preferred embodiment the input data may correspond to payload data of a first data burst, the first training data may correspond to the training data of the first data burst, the second training data may correspond to the training data of a second data burst succeeding the first data burst, and the third training data may correspond to the training data of a plurality of data bursts. This allows the selection of a symbol candidate which is calculated under consideration of training data from the first data burst, training data from the second data burst, or long range training data which preferably correspond to a data frame comprising a plurality of data bursts.

The estimation of the antenna weights may be based on a least square estimation. Preferably a covariance matrix for the input data is calculated and the estimation of the antenna weights is a least square estimation with regularization.

The present invention is particular useful for multiple-antenna interference cancellation in unsynchronized backhaul and/or cellular WIMAX-based networks. According to a preferred embodiment, the receiver is operative to receive Orthogonal Frequency Division Multiplexing (OFDM) data bursts. In this case, the input data may correspond to payload data of a first OFDM data burst; the first training data may correspond to the pilot data of the first data burst; the second training data may correspond to the pilot data of a second OFDM data burst succeeding the first data burst; the first and second space-frequency filter may generate first and second candidates for an OFDM symbol, respectively; and the selector may select the first symbol candidate or the second symbol candidate and provides an OFDM symbol estimate.

The present invention may be implemented in many different way using hardware and software components. According to one aspect, the invention relates to a method for multiple-antenna interference cancellation for wirelessly received digital data bursts including training data for wireless channel estimation. In addition a computer program for performing the method is contemplated.

The invention may be understood by reference to the following description of preferred embodiments taken in conjunction with the accompanying drawings, wherein

Fig. 1. illustrates a typical backhaul network scenario;

Fig. 2. illustrates the frame structure for IEEE 802.15-2004;

Fig. 3. illustrates an asynchronous interference scenario;

Fig. 4. illustrates a stationary solution;

Fig. 5. illustrates a regularized burst-based solution;

Fig. 6. illustrates the schematic block-scheme of an embodiment of the invention;

Fig. 7. illustrates the symbol-by-symbol processing according to an embodiment of the invention; and

Fig. 8. shows simulation results for an embodiment of the invention.

Fig. 6. illustrates the block-scheme of an embodiment for unsynchronized backhaul and/or cellular WIMAX-based networks using Orthogonal Frequency Division Multiplexing (OFDM). The basic idea in this embodiment is to apply a frame-based stationary solution and regularized estimators based on the left and right surrounding pilot intervals to every OFDM data symbol with on-line selection of the best estimates.

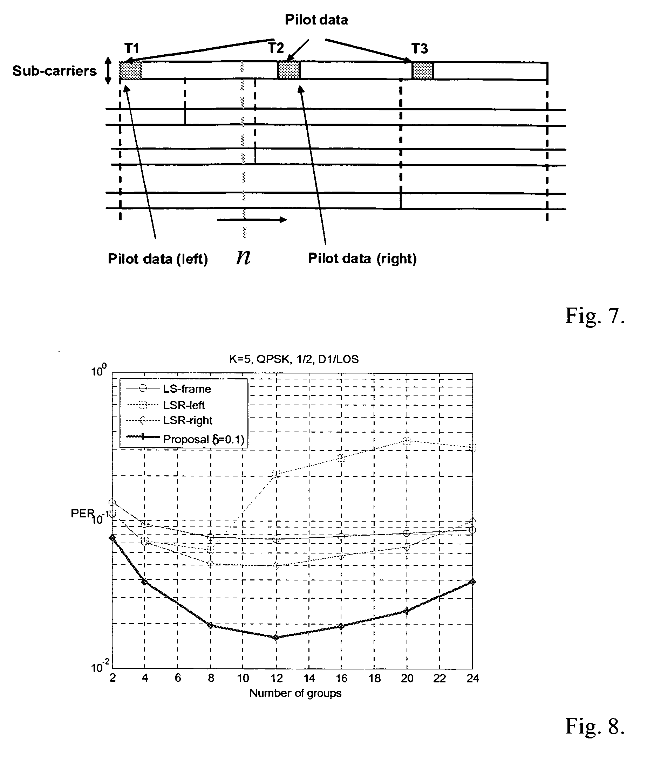

This idea is illustrated in Fig. 6 in a block-scheme for a receiver 10, where a selector block 20 uses the Finite Alphabet (FA) or Constant Modulus (CM) properties of communication signals for symbol-by-symbol selection of the signal candidate with the lowest distance from the FA(CM). FA means that communication signals are drawn from the finite sets of symbols, for example, binary or quadrature amplitude modulation (QAM). Amplitude of the CM signal remains constant for all the symbols from the given FA. The FA or CM properties allow on-line efficiency estimation of signal recovery. Pilot data (left/right) intervals are defined for every OFDM symbol as illustrated in Fig. 7. For example, T1/T2 are the left/right pilot intervals for all the symbols in burst 1 and T2/T3 are the left/right pilot intervals for all the symbols in burst 2.

The receiver 10 according to the embodiment of Fig. 6 comprises an antenna 11 with K antenna elements, a data storage 12, a covariance matrix estimator 16 and three antenna weight estimators 13, 14, 15. The regularized estimators (LSR) 13 and 14 use left and right pilot data for the antenna weight estimation, respectively.

The covariance matrix for the n-th OFDM symbol is supplied from the covariance matrix estimator 16. In addition, the covariance matrix and cross correlation vector (not shown in Fig. 6) estimated over the left/right training interval for the n-th OFDM symbol may be utilized for the calculation of the antenna weights w1 and w2. LS Estimator 15 calculates antenna weights w3 under consideration of the covariance matrix and cross-correlation vector (not shown in Fig. 6) estimated over the training data of the OFDM frame. Symbol-by-symbol regularization by means of the estimated covariance matrix improves interference cancellation at the intervals that contain different sets of interference components compared to the left/right training intervals. For example, for all the symbols in interval $\ominus_2$ in Fig. 3 regularization allows cancellation of CCI 2 for the LSR based on the left training interval T1 and cancellation of CCI 3 for the LSR based on the right training interval T2. The weights are provided to space-frequency filters (SFF) 17, 18, 19 which each calculate a candidate for the n-th OFDM symbol based on their respective weights and the n-th OFDM symbol data received from the data storage 12. The selector 20 receives the symbol candidates and selects one candidate as symbol estimate for the n-th OFDM symbol under consideration of communication signal properties such as its final alphabet or constant modulus.

The proposed non-stationary symbol-by symbol solution exploits the particular structure of the WIMAX (IEEE 802.16-2004) data frames and applies an algorithm suitable for each of OFDM symbols without analyzing the underlying interference scenario in the unsynchronized network.

The invention has the advantage over the burst-based regularized solution in the asynchronous scenario illustrated in Fig. 3 in that it exploits the possibility of using different pilot intervals for the given data interval. For example, in Fig. 3 for burst 1 two regularized solutions can be formed based on the left and right pilot intervals (T1 and T2 for burst 1) with different sets of CCII components and different efficiency.

Symbol-by-symbol processing can be implemented taking into account channel correlation for adjacent sub-carriers. Two known techniques for that are subcarriers grouping and parametric modeling in frequency domain as disclosed in A. M. Kuzminskiy, "Antenna array interference cancellation for OFDM based on parametric modeling of the weights," in Proc. 35th Asilomar Conf. Sig., Syst., and Comp., 2001.

An implementation example for a K antenna element interference cancellation based on sub-carrier grouping (one weight vector is used for a group of adjacent sub-carriers) is presented below for one group (other groups are similar):

- The operation of the space frequency filtering SFF of this embodiment is specified according to the following equation:

$$\hat{\mathbf{s}}_g(n) = \hat{\mathbf{w}}_g^*(n)\mathbf{X}(n), \ g = 1,2,3,$$

where $\mathbf{X}(n) = [\mathbf{x}(1),...,\mathbf{x}(N_{gr})]$ is the $K \times N_{gr}$ matrix of input signals corresponding to the group of $N_{gr}$ sub-carriers for the $n$-th OFDM symbol, $\hat{\mathbf{s}}_g(n) = [s_g(1),..., s_g(N_{gr})]$ is the $1 \times N_{gr}$ vector the $g$-th OFDM symbol candidate, $\hat{\mathbf{w}}_g(n)$ is the $K \times 1$ weight vector for the $g$-th OFDM symbol candidate, and $(\cdot)^*$ is the transpose conjugate operator.

- The operation of the least square estimator LS of this embodiment is specified according to the following equation:

$$\hat{\mathbf{w}}_1(n) = \left(\sum_{l=1}^{L} \hat{\mathbf{R}}_{u}\right)^{-1}\left(\sum_{l=1}^{L} \hat{\mathbf{r}}_{u}\right),$$

where $\hat{\mathbf{R}}_{u} = N_{gr}^{-1}\mathbf{X}_u\mathbf{X}_u^*$, $\hat{\mathbf{r}}_{u} = N_{gr}^{-1}\mathbf{X}_u\mathbf{s}_t^*$; is the covariance matrix and cross-correlation vector estimated over the $l$-th training interval, $s_t$ is the $1 \times N_{gr}$ vector of pilots, L is the number of bursts in a frame.

- The operation of the regularized least square estimator for the left training data LSR (left) of this embodiment is specified according to the following equation:

$$\dot{\mathbf{w}}_{\cdot}(n) = [(1-\delta)\hat{\mathbf{R}}_{t\text{-left}} +\delta\hat{\mathbf{R}}_{d}(n)]^{-1}\hat{\mathbf{r}}_{t\text{-left}},$$

where = is the covariance matrix estimated over the $n$-th OFDM symbol (output of the Covariance Matrix Estimator in Fig. 6), $\hat{\mathbf{R}}_{t\text{-left}}$, $\hat{\mathbf{r}}_{t\text{-left}}$ are the covariance matrix and cross-correlation vector estimated over the left training interval for the $n$-th OFDM symbol, and $0 < \delta < 1$ is the regularization coefficient.

- The operation of the regularized least square estimator for the right training data LSR (right) of this embodiment is specified according to the following equation:

$$\dot{\mathbf{w}}_{\cdot}(n) = [(1-\delta)\hat{\mathbf{R}}_{t\text{-right}} +\delta\hat{\mathbf{R}}_{d}(n)]^{-1}\hat{\mathbf{r}}_{t\text{-right}},$$

where $\hat{\mathbf{R}}_{t\text{-right}}$, $\hat{\mathbf{r}}_{t\text{-right}}$ are the covariance matrix and cross-correlation vector estimated over the right training interval for the $n$-th OFDM symbol, and $\hat{\mathbf{w}}_3(n) = 0$ for the last burst in a frame without the right pilot interval.

- The operation of the Selector of this embodiment is specified according to the following equation:

$$\hat{\mathbf{s}}(n) = \hat{\mathbf{s}}_{g_0}(n),$$

$$g_0 = \arg \min_{g=1,2,3} \text{dist}_{FA}[\hat{\mathbf{s}}_g(n)],$$

$$\text{dist}_{FA}[\hat{\mathbf{s}}_g(n)] = \sum_{q=1}^{N_{gr}} \min_{e=1,...,E}(|a_e - \hat{s}_g(q)|),$$

where $\hat{s}(n)$ is the $1 \times N_{gr}$ vector the $n$-th OFDM symbol estimate, and $\alpha_e$ is the $e$-th symbol of the FA of E symbols.

The proposed non-stationary symbol-by symbol solution exploits the particular structure of the WIMAX (IEEE 802.16-2004) data frames and applies the algorithm suitable for each of OFDM symbols without analyzing the underlying interference scenario in the unsynchronized network.

The following simulation illustrates the positive effect of the proposed solution compared to the prior art.

The simulation assumptions are as follows:

- IEEE 802.16-2004 slot structure: 256 sub-carriers, cyclic prefix of 32 samples, preamble of 128 sub-carriers, 8 pilot sub-carriers, 192 data sub-carriers,
- 20 MHz bandwidth,
- 10 OFDM symbols in a slot (data burst), 4 slots in a frame,
- QPSK signaling,
- Convolutional coding with ½ code rate,
- 1728 uncoded bits in a slot, 6912 uncoded bits in a frame,
- $14.4\mu s$ OFDM symbol, $144\mu s$ slot, and $576\mu s$ frame duration,
- D1/LOS WINNER propagation channels for the desired signal and CCI,
- $2\lambda$ separation between 5 receive antennas,
- 3 interfering nodes (6 interference components),
- 30 dBm transmit power,
- -92 dBm noise power,
- Receiver location: [0,0] m,
- Desired signal location [300,300] m,
- Interfering nodes location: [600,10;10,600;600,600] m.

The packet error rate (PER) simulation results are presented in Fig. 8 for the symbol-by-symbol solution shown in Fig. 6, for the stationary frame-based filtering illustrated in Fig. 4, and for the regularized burst-based (left and right) estimators shown in Fig. 5. One can see that the proposed solution demonstrates more than 3 times gain compared to the known estimators for the properly selected number of sub-carrier groups.

**Claims**

1. A receiver (10) for multiple-antenna interference cancellation for digital data bursts transmitted over a wireless channel, wherein in addition to payload data the data bursts include training data for wireless channel estimation, the receiver comprising:

   a plurality of antenna elements for receiving input data;
   a first estimator (13, 14, 15) for estimating a first set of antenna weights for the antenna elements from first training data;
   a second estimator (13, 14, 15) for estimating a second set of antenna weights for the antenna elements from second training data;
   a first space-frequency filter (17, 18, 19) for providing a first symbol candidate for the input data based on the first set of antenna weights;
   a second space-frequency filter (17, 18, 19) for providing a second symbol candidate for the input data based on the second set of antenna weights; and

   a selector (20) for selecting, as data symbol estimate, the first symbol candidate or the second symbol candidate;

   wherein the input data correspond to payload data of a first data burst, the first training data correspond to the training data of the first data burst, and the second training data correspond to the training data of a second data burst or to the training data of a plurality of data bursts.

2. Receiver of claim 1, further comprising:

   a third estimator (13, 14, 15) for estimating a third set of antenna weights from third training data; and
   a third space-frequency filter (17, 18, 19) for providing a third symbol candidate for the input data based on the third set of antenna weights; wherein
   the selector (20) is configured for selecting one of the first symbol candidate, the second symbol candidate, and the third candidate,
   wherein the second training data correspond to the training data of a second data burst succeeding the first data burst, and the third training data correspond to the training data of a plurality of data bursts.

3. Receiver of claim 1, further comprising a covariance matrix estimator (16) for estimating an input data covariance matrix, wherein at least one of the first and second estimators (13, 14, 15) is configured as regularized estimator for estimating antenna weights in consideration of the estimated covariance matrix.

4. Receiver of claim 1, wherein the selector (20) is configured to select the symbol candidate with the lowest distance from a finite alphabet or constant modulus of the input data.

5. Receiver of claim 1, operative to receive Orthogonal Frequency Division Multiplexing, OFDM, data bursts.

6. Receiver of claim 5, wherein
   the input data correspond to payload data of a first OFDM data burst; the first training data correspond to the pilot data of the first data burst; the second training data correspond to the pilot data of a second OFDM data burst succeeding the first data burst; the first and second space-frequency filter (17, 18, 19) generate first and second candidates for an OFDM symbol, respectively; and the selector (20) selects the first symbol candidate or the second symbol candidate and provides an OFDM symbol estimate.

7. Method for multiple-antenna interference cancellation for wirelessly received digital data bursts including in addition to payload data training data for wireless channel estimation, the method comprising:

estimating a first set of antenna weights for a plurality of antenna elements from first training data;
estimating a second set of antenna weights for the plurality of antenna elements from second training data;
space-frequency filtering input data based on the first antenna weights for providing a first symbol candidate;
space-frequency filtering the input data based on the second antenna weights for providing a second symbol candidate; and
selecting the first symbol candidate or the second symbol candidate as estimated data symbol; wherein the input data correspond to payload data of a first data burst, the first training data correspond to the training data of the first data burst, and the second training data correspond to the training data of a second data burst or to the training data of a plurality of data bursts.

8. Method of claim 7, wherein the estimation steps for the antenna weights are least square estimations.

9. Method of claim 7, comprising the further step of estimating a covariance matrix for the input data, wherein the estimation steps for the sets of antenna weights arc least square estimations with regularization.

**Patentansprüche**

1. Ein Empfänger (10) für die Störungsunterdrückung mit mehreren Antennen für über einen drahtlosen Kanal übertragene digitale Datenbursts, wobei die Datenbursts zusätzlich zu Nutzdaten Trainingsdaten für die Schätzung des drahtlosen Kanals enthalten, wobei der Empfänger umfasst:

Eine Vielzahl von Antennenelementen zum Empfangen von Eingangsdaten;
eine erste Schätzvorrichtung (13, 14, 15) zum Schätzen eines ersten Satzes von Antennengewichtungen für die Antennenelemente ausgehend von den ersten Trainingsdaten;
eine zweite Schätzvorrichtung (13, 14, 15) zum Schätzen eines zweiten Satzes von Antennengewichtungen für die Antennenelemente ausgehend von den zweiten Trainingsdaten;
einen ersten Raumfrequenzfilter (17, 18, 19) zum Bereitstellen eines ersten Symbolkandidaten für die Eingangsdaten auf der Basis des ersten Satzes von Antennengewichtungen;

einen zweiten Raumfrequenzfilter (17, 18, 19) zum Bereitstellen eines zweiten Symbolkandidaten für die Eingangsdaten auf der Basis des zweiten Satzes von Antennengewichtungen; und
eine Auswahlvorrichtung (20) zum Auswählen des ersten Symbolkandidaten oder des zweiten Symbolkandidaten als eine Datensymbolschätzung;

wobei die Eingangsdaten den Nutzdaten eines ersten Datenbursts entsprechen, wobei die ersten Trainingsdaten den Trainingsdaten des ersten Datenbursts entsprechen, und wobei die zweiten Trainingsdaten den Trainingsdaten eines zweiten Datenbursts oder den Trainingsdaten einer Vielzahl von Datenbursts entsprechen.

2. Empfänger nach Anspruch 1, weiterhin umfassend:

Eine dritte Schätzvorrichtung (13, 14, 15) zum Schätzen eines dritten Satzes von Antennengewichtungen ausgehend von dritten Trainingsdaten; und
einen dritten Raumfrequenzfilter (17, 18, 19) zum Bereitstellen eines dritten Symbolkandidaten für die Eingangsdaten auf der Basis eines dritten Satzes von Antennengewichtungen; wobei
die Auswahlvorrichtung (20) für die Auswahl entweder des ersten, des zweiten oder des dritten Symbolkandidaten konfiguriert ist,
wobei die zweiten Trainingsdaten den Trainingsdaten eines zweiten Datenbursts, welcher auf den ersten Datenburst folgt, und die dritten Trainingsdaten den Trainingsdaten einer Vielzahl von Datenbursts entsprechen.

3. Empfänger nach Anspruch 1, weiterhin umfassend eine Kovarianzmatrix-Schätzvorrichtung (16) zum Schätzen einer Kovarianzmatrix der Eingangsdaten, wobei zumindest entweder die erste oder die zweite Schätzvorrichtung (13, 14, 15) als eine geregelte Schätzvorrichtung zum Schätzen der Antennengewichtungen unter Berücksichtigung der geschätzten Kovarianzmatrix konfiguriert ist.

4. Empfänger nach Anspruch 1, wobei die Auswahlvorrichtung (20) für die Auswahl des Symbolkandidaten mit der kleinsten Entfernung von einem endlichen Alphabet oder einem konstanten Modulus der Eingangsdaten konfiguriert ist.

5. Empfänger nach Anspruch 1, dazu ausgelegt, orthogonale Frequenzmultiplex, OFDM-Datenbursts zu empfangen.

6. Empfänger nach Anspruch 5, wobei

die Eingangsdaten Nutzdaten eines ersten OFDM-Datenbursts entsprechen; die ersten Trainingsdaten den Pilotdaten des ersten Datenbursts entsprechen; und die zweiten Trainingsdaten den Pilotdaten eines zweiten OFDM-Datenbursts, welcher auf den ersten Datenburst folgt, entsprechen; wobei der erste und der zweite Raumfrequenzfilter (17, 18, 19) jeweils einen ersten und einen zweiten Kandidaten für ein OFDM-Symbol erzeugen; und wobei die Auswahlvorrichtung (20) den ersten oder den zweiten Symbolkandidaten auswählt und eine Schätzung des OFDM-Symbols bereitstellt.

7. Verfahren für die Störungsunterdrückung mit mehreren Antennen für drahtlos empfangene digitale Datenbursts, welche zusätzlich zu Nutzdaten Trainingsdaten für die Schätzung des drahtlosen Kanals enthalten, wobei das Verfahren die folgenden Schritte umfasst:

Schätzen eines ersten Satzes von Antennengewichtungen für eine Vielzahl von Antennenelementen ausgehend von den ersten Trainingsdaten;

Schätzen eines zweiten Satzes von Antennengewichtungen für die Vielzahl von Antennenelementen ausgehend von den zweiten Trainingsdaten;

Raumfrequenzfilterung der Eingangsdaten auf der Basis der ersten Antennengewichtungen zum Bereitstellen eines ersten Symbolkandidaten;

Raumfrequenzfilterung der Eingangsdaten auf der Basis der zweiten Antennengewichtungen zum Bereitstellen eines zweiten Symbolkandidaten; und

Auswählen des ersten Symbolkandidaten oder des zweiten Symbolkandidaten als ein geschätztes Datensymbol; wobei die Eingangsdaten den Nutzdaten eines ersten Datenbursts entsprechen, wobei die ersten Trainingsdaten den Trainingsdaten des ersten Datenbursts entsprechen, und wobei die zweiten Trainingsdaten den Trainingsdaten eines zweiten Datenbursts oder den Trainingsdaten einer Vielzahl von Datenbursts entsprechen.

8. Verfahren nach Anspruch 7, wobei die Schritte des Schätzens für die Antennengewichtungen Schätzungen der kleinsten Fehlerquadrate sind.

9. Verfahren nach Anspruch 7, weiterhin umfassend den Schritt des Schätzens einer Kovarianzmatrix für die Eingangsdaten, wobei die Schritte des Schätzens für die Sätze von Antennengewichtungen Schätzungen der kleinsten Fehlerquadrate mit Regularisation sind.

**Revendications**

1. Récepteur (10) pour l'annulation d'interférence à antennes multiples pour des paquets de données numériques émis par l'intermédiaire d'un canal sans fil, dans lequel, outre des données de charge utile, les paquets de données comportent des données d'apprentissage pour l'estimation de canal sans fil, le récepteur comprenant :

une pluralité d'éléments d'antenne pour recevoir des données d'entrée ;
un premier dispositif d'estimation (13, 14, 15) pour estimer un premier ensemble de poids d'antenne pour les éléments d'antenne à partir des premières données d'apprentissage ;
un deuxième dispositif d'estimation (13, 14, 15) pour estimer un deuxième ensemble de poids d'antenne pour les éléments d'antenne à partir des deuxièmes données d'apprentissage ;
un premier filtre de fréquences spatiales (17, 18, 19) pour fournir un premier candidat de symbole pour les données d'entrée basées sur le premier ensemble de poids d'antenne ;
un deuxième filtre de fréquences spatiales (17, 18, 19) pour fournir un deuxième candidat de symbole pour les données d'entrée basées sur le deuxième ensemble de poids d'antenne ; et
un sélecteur (20) pour sélectionner, en tant qu'estimation de symbole de données, le premier candidat de symbole ou le deuxième candidat de symbole ;

dans lequel les données d'entrée correspondent aux données de charge utile d'un premier paquet de données, les premières données d'apprentissage correspondent aux données d'apprentissage du premier paquet de données, et les deuxièmes données d'apprentissage correspondent aux données d'apprentissage d'un deuxième paquet de données ou aux données d'apprentissage d'une pluralité de paquets de données.

2. Récepteur selon la revendication 1, comprenant en outre :

un troisième dispositif d'estimation (13, 14, 15) pour estimer un troisième ensemble de poids d'antenne à partir des troisièmes données d'apprentissage ; et
un troisième filtre de fréquences spatiales (17, 18, 19) pour fournir un troisième candidat de symbole pour les données d'entrée basées sur le troisième ensemble de poids d'antenne ; dans lequel
le sélecteur (20) est configuré pour sélectionner un candidat parmi le premier candidat de symbole, le deuxième candidat de symbole et le troisième candidat,

dans lequel les deuxièmes données d'apprentissage correspondent aux données d'apprentissage d'un deuxième paquet de données succédant au premier paquet de données, et les troisièmes données d'apprentissage correspondent aux données d'apprentissage d'une pluralité de paquets de données.

3. Récepteur selon la revendication 1, comprenant en outre un dispositif d'estimation de matrice de covariance (16) pour estimer une matrice de covariance de données d'entrée, dans lequel au moins un parmi les premier et deuxième dispositifs d'estimation (13, 14, 15) est configuré en tant que dispositif d'estimation régularisé pour estimer les poids d'antenne en fonction de la matrice de covariance estimée.

4. Récepteur selon la revendication 1, dans lequel le sélecteur (20) est configuré pour sélectionner le candidat de symbole le plus proche d'un alphabet fini ou d'un module constant des données d'entrée.

5. Récepteur selon la revendication 1, permettant de recevoir des paquets de données de multiplexage par répartition orthogonale de la fréquence, OFDM.

6. Récepteur selon la revendication 5, dans lequel les données d'entrée correspondent aux données de charge utile d'un premier paquet de données OFDM ; les premières données d'apprentissage correspondent aux données pilotes du premier paquet de données ; les deuxièmes données d'apprentissage correspondent aux données pilotes d'un deuxième paquet de données OFDM succédant au premier paquet de données ; les premier et deuxième filtres de fréquences spatiales (17, 18, 19) génèrent les premier et deuxième candidats d'un symbole OFDM, respectivement ; et le sélecteur (20) sélectionne le premier candidat de symbole ou le deuxième candidat de symbole et fournit une estimation de symbole OFDM.

7. Procédé pour l'annulation d'interférence à antennes multiples pour des paquets de données numériques reçues par une connexion sans fil comportant, outre des données de charge utile, des données d'apprentissage pour l'estimation de canal sans fil, le procédé comprenant :

l'estimation d'un premier ensemble de poids d'antenne pour une pluralité d'éléments d'antenne à partir des premières données d'apprentissage ;

l'estimation d'un deuxième ensemble de poids d'antenne pour la pluralité d'éléments d'antenne à partir des deuxièmes données d'apprentissage ;

le filtrage de fréquences spatiales de données d'entrée basées sur les premiers poids d'antenne pour fournir un premier candidat de symbole ;

le filtrage de fréquences spatiales de données d'entrée basées sur les deuxièmes poids d'antenne pour fournir un deuxième candidat de symbole ; et

la sélection du premier candidat de symbole ou du deuxième candidat de symbole en tant que symbole de données estimé ; dans lequel les données d'entrée correspondent aux données de charge utile d'un premier paquet de données, les premières données d'apprentissage correspondent aux données d'apprentissage du premier paquet de données, et les deuxièmes données d'apprentissage correspondent aux données d'apprentissage d'un deuxième paquet de données ou aux données d'apprentissage d'une pluralité de paquets de données.

8. Procédé selon la revendication 7, dans lequel les étapes d'estimation des poids d'antenne sont des estimations des moindres carrés.

9. Procédé selon la revendication 7, comprenant l'étape supplémentaire d'estimation d'une matrice de covariance pour les données d'entrée, dans lequel les étapes d'estimation des ensembles de poids d'antenne sont des estimations des moindres carrés avec régularisation.

Node 1

CCI 3   Node 2

CCI 4

CCI 1   CCI 2

Signal of interest

CCI 6

CCI 5

Node 3

Node 0

☐ Receiver   ▦ Transmitter

Fig. 1.

Pilots   Data

Sub-carrier

Time   Burst

Fig. 2.

Fig. 3.

Fig. 4.

EP 2 040 390 B1

Fig. 5.

Fig. 6.

Fig. 7.

Fig. 8.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- IEEE Standard for Local and Metropolitan Area Networks - Part 16: Air Interface for Fixed Broadband Wireless Access Systems. *IEEE 802.16-REVd/D5-2004,* May 2004
- **M. NICOLI ; M. SALA ; O. SIMEONE ; L. SAMPIETRO ; C. SANTACESARIA.** Adaptive array processing for time varying interference mitigation in IEEE 802.16 systems. *Proc. PIMRC,* 2006
- **A. M. KUZMINSKIY ; Y. I. ABRAMOVICH.** Second-order asynchronous interference cancellation: Regularized semi-blind technique and non-asymptotic maximum likelihood benchmark. *Signal Processing,* 2006, vol. 86 (12), 3849-3863
- **QINGLI LIU et al.** PERFORMANCE OF DECISION-FEEDBACK EQUALIZERS WITH DUAL ANTENNA DIVERSITY. *PERSONAL COMMUNICATION - FREEDOM THROUGH WIRELESS TECHNOLOGY. SECAUCUS,* vol. 43, 637-640
- **A. M. KUZMINSKIY.** Antenna array interference cancellation for OFDM based on parametric modeling of the weights. *Proc. 35th Asilomar Conf. Sig., Syst., and Comp.,* 2001